(19) **Europäisches Patentamt**
**European Patent Office**
**Office européen des brevets**

(11) **EP 1 503 928 B1**

(12) **EUROPÄISCHE PATENTSCHRIFT**

(45) Veröffentlichungstag und Bekanntmachung des Hinweises auf die Patenterteilung:
**17.01.2007 Patentblatt 2007/03**

(21) Anmeldenummer: **03720548.1**

(22) Anmeldetag: **02.05.2003**

(51) Int Cl.:
**B62D 5/04** $^{(2006.01)}$

(86) Internationale Anmeldenummer:
**PCT/EP2003/004632**

(87) Internationale Veröffentlichungsnummer:
**WO 2003/097428 (27.11.2003 Gazette 2003/48)**

(54) **VERFAHREN ZUM BETRIEB EINES LENKSYSTEMS FÜR EIN KRAFTFAHRZEUG UND LENKSYSTEM**

METHOD FOR OPERATING A STEERING SYSTEM FOR A MOTOR VEHICLE, AND CORRESPONDING STEERING SYSTEM

PROCEDE DE FONCTIONNEMENT D'UN SYSTEME DE DIRECTION D'UN VEHICULE AUTOMOBILE ET SYSTEME DE DIRECTION

(84) Benannte Vertragsstaaten:
**DE ES FR GB IT**

(30) Priorität: **16.05.2002 DE 10221678**

(43) Veröffentlichungstag der Anmeldung:
**09.02.2005 Patentblatt 2005/06**

(73) Patentinhaber: **ZF Lenksysteme GmbH 73527 Schwäbisch Gmünd (DE)**

(72) Erfinder:
• **HEILIG, Arnulf**
 **73529 Schwäbisch Gmünd (DE)**
• **BÖNSCH, Michael**
 **73550 Waldstetten (DE)**
• **ROMMEL, Bernd**
 **73540 Heubach (DE)**

(56) Entgegenhaltungen:
 **WO-A-01/60682          DE-A- 3 842 334**

EP 1 503 928 B1

**Beschreibung**

Die Erfindung bezieht sich auf ein Verfahren zum Betrieb eines Lenksystems für ein Kraftfahrzeug und auf ein Lenksystem nach dem Oberbegriff des Anspruches 1 bzw. 6.

In der Druckschrift DE 197 13 576 A1 ist ein Lenksystem für ein Kraftfahrzeug offenbart, bei dem die Lenkbewegung des Fahrers über das Lenkrad und eine Lenkwelle auf ein Lenkgetriebe übertragen wird, über das die Lenkbewegung unter Berücksichtigung eines Übersetzungsverhältnisses in eine Stellbewegung der gelenkten Vorderräder umgesetzt wird. Zur Unterstützung und Verstärkung der vom Fahrer erzeugten Lenkkraft ist ein Stellmotor vorgesehen, in welchem in Abhängigkeit des vom Fahrer generierten Handlenkmoments ein Motorstellmoment erzeugt wird, das auf die gelenkten Fahrzeugräder übertragen wird.

In der Druckschrift DE 38 42 334 A1 wird ein Verfahren zur Unterstützung der bei einem Fahrzeug aufzubringenden Lenkkräfte offenbart, bei dem das von einem Elektromotor aufgebrachte Zusatzmoment in Abhängigkeit des vom Fahrer aufgebrachten Handmoments und des insgesamt abgegebenen Lenkmoments geregelt wird. Um die Reibung im Lenksystem zu kompensieren, ist vorgesehen, die Sollmomentvorgabe für den Elektromotor unter Verwendung eines Kennlinienumformers vorzunehmen, der zum einen ein Totglied und zum anderen eine geschwindigkeitsabhängige Komponente beinhaltet. Damit wird die durch Reibung bedingte Hysteresekurve des Gesamtlenksystems in vorteilhafter Weise beeinflusst, d.h. die Breite der Hysteresekurve verringert.

Die in der Offenlegungsschrift WO 01 60 682 A1 vorgestellte Methode zur automatischen Mittenzentrierung eines Lenkrads einer elektrischen Hilfskraftlenkung sieht vor, rechts- und linksseitig wirkende Reibungsanteile des Lenkgetriebes mittels Lenkwinkel- und Drehmomentsensoren zu detektieren und zu akkumulieren. Des Weiteren ist vorgesehen, aus diesen Daten eine Hysterese zu berechnen, von welcher ein zur momentanen Situation passender Anteil zur Reibungskompensation abgeleitet wird, um das Lenkrad in Mittelstellung zu führen.

Grundsätzlich besteht bei derartigen Lenksystemen das Problem, dass insbesondere zum Auslösen einer Lenkbewegung vom Fahrer ein erhöhter Lenkwiderstand überwunden werden muss, der auf Systemreibung im Lenksystem zurückzuführen ist. Die Systemreibung entsteht durch das Zusammenwirken bewegter mechanischer Teile im Lenksystem. Die Reibung kann zwar grundsätzlich durch das Aufschalten des Motorstellmomentes kompensiert werden, jedoch besteht beim Einleiten einer Lenkbewegung das Problem, dass die Reibungskompensation erst mit zunehmender Motordrehzahl des Stellmotors voll wirksam wird. Bei kleinen Lenkbewegungen muss der Fahrer daher ein erhöhtes Lenkmoment aufbringen, was zu einem subjektiv unangenehmen Lenkgefühl führt.

Der Erfindung liegt das Problem zugrunde, ein Lenksystem bzw. ein Verfahren für den Betrieb eines Lenksystems zu schaffen, bei dem auch bei geringen Lenkbewegungen das vom Fahrer aufzubringende Lenkmoment reduziert ist. Dies soll insbesondere auch für Lenksysteme mit einer durchgehenden mechanischen Verbindung zwischen Lenkrad und gelenkten Rädern gelten.

Dieses Problem wird erfindungsgemäß bei einem Verfahren mit den Merkmalen des Anspruches 1 und bei einem Lenksystem mit den Merkmalen des Anspruches 6 gelöst. Die Unteransprüche geben zweckmäßige Weiterbildungen an.

Bei dem erfindungsgemäßen Verfahren wird in der Sollmomentvorgabe, die dem Stellmotor für die Erzeugung des tatsächlichen Motorstellmoments zugeführt wird, ein die Reibung im Lenksystem zumindest annähernd kompensierendes Hysteresemoment berücksichtigt, das auf das Sollmoment aufaddiert wird. Die Ermittlung dieses die Reibung im Lenksystem kompensierenden Motorsollmoments erfolgt vor der Übertragung der Sollmomentvorgabe an den Stellmotor, zweckmäßig in einer vorgeschalteten Regel- und Steuereinheit im Lenksystem. Über die vorgeschaltete Berücksichtigung des Hysteresemoments in der Sollmomentvorgabe kann die Systemreibung im Lenksystem zumindest näherungsweise kompensiert und insbesondere im Bereich kleiner Lenkbewegungen das vom Fahrer aufzubringende Lenkmoment verringert werden. Die verringerten Lenkkräfte bei kleinen Lenkbewegungen verbessern auch das subjektive Fahrgefühl für den Fahrer.

Das Hysteresemoment wird vorteilhaft aus einer Hysteresekennlinie als Funktion des nicht-kompensierten Sollmoments ermittelt, indem beispielsweise das nicht-kompensierte Sollmoment in die Hysteresekennlinie als Eingangsgröße einfließt und als Ausgangsgröße ein theoretisches Istmoment bestimmt wird, welches sich unter Berücksichtigung der Hysterese aus dem nicht-kompensierten Sollmoment ergibt. Das Hysteresemoment kann anschließend durch Subtraktion des theoretischen Istmoments vom nicht-kompensierten Sollmoment ermittelt werden. Das Hysteresemoment bezeichnet die Momentendifferenz zwischen dem idealen Verlauf des Istmoments und dem durch Berücksichtigung der Hysterese sich ergebenden theoretischen Istmoment. Dieser Momentendifferenzbetrag wird auf das nicht-kompensierte Sollmoment zur Erzielung des kompensierten Motorsollmoments hinzuaddiert.

Das nicht-kompensierte Sollmoment wird bevorzugt als Funktion eines nicht-kompensierten Motorsollmoments ermittelt, das wiederum als Funktion des vom Fahrer vorgegebenen Handlenkmoments zur Verstärkung der Lenkbewegung zu bestimmen ist. Zusätzlich kann in dem nicht-kompensierten Sollmoment additiv das vom Fahrer vorgegebene Handlenkmoment berücksichtigt werden, zweckmäßig jedoch erst im Anschluss an eine Lenkübersetzung in einem Übersetzungsgetriebe des Lenksystems.

Das erfindungsgemäße Lenksystem, welches sich vorteilhaft zur Durchführung des Verfahrens eignet, umfasst ein Übersetzungsgetriebe über Übertragungsweg zwischen Lenkrad und gelenkten Fahrzeugrädern sowie einen Stellmotor zur Verstärkung des Handlenkmoments und eine Regel- und Steuereinheit, in der eine die Reibung im Lenksystem kennzeichnende Hysteresefunktion abgespeichert ist und ein Hysteresemoment zu ermitteln ist, welches zur Kompensation der Reibung auf die einem Stellmotor zuzuführende Sollmomentvorgabe aufaddiert wird.

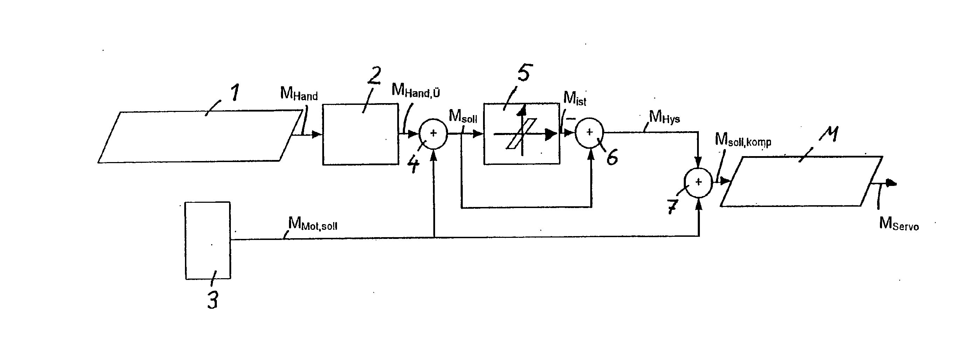

Weitere Vorteile und zweckmäßige Ausführungen sind den weiteren Ansprüchen, der Figurenbeschreibung und der Zeichnung zu entnehmen, die ein Blockschaltdiagramm zur Ermittlung eines Motorsollmoments für den Stellmotor des Lenksystems in Abhängigkeit der im Lenksystem auftretenden Reibung zeigt.

Die in dem Blockschaltbild dargestellten einzelnen Blöcke symbolisieren den Ablauf des Verfahrens zum Betrieb des Lenksystems. In einem ersten Block 1 wird zunächst vom Fahrer ein Handlenkmoment $M_{Hand}$ auf das Lenkrad des Fahrzeuges übertragen, welches gemäß dem nachfolgenden Block 2 in einem Übersetzungsgetriebe des Lenksystems eine Lenkübersetzung erfährt und auf einen Wert $M_{Hand,Ü}$ reduziert wird.

In Abhängigkeit des vom Fahrer erzeugten Handlenkmomentes $M_{Hand}$ wird in einem Block 3 ein nicht-kompensiertes Motorsollmoment $M_{Mot,soll}$ erzeugt, welches als Sollvorgabe - gemeinsam mit dem Handlenkmoment - dem Stellmotor M des Lenksystems zur Verstärkung der Lenkkraft zuzuführen ist. Das nicht-kompensierte Motorsollmoment $M_{Mot,soll}$ kann beispielsweise als nichtlineare Funktion in Abhängigkeit des Handlenkmomentes $M_{Hand}$ berechnet werden.

In einem Addierer 4 werden das nicht-kompensierte Motorsollmoment $M_{Mot,soll}$ und das übersetzte Handlenkmoment $M_{Hand,Ü}$ zusammengeführt und zu einem nicht-kompensierten Sollmoment $M_{soll}$ addiert. Dieses nicht-kompensierte Sollmoment $M_{soll}$ wird als Eingangsgröße einer Hysteresekennlinie 5 zugeführt, über die die Systemreibung im Lenksystem berücksichtigt werden kann. In Abhängigkeit des nicht-kompensierten Sollmoments $M_{soll}$ wird ein theoretisches Istmoment $M_{ist}$ ermittelt, in welchem die Hysterese berücksichtigt ist und das am Ausgang der Hysteresekennlinie 5 zur weiteren Verarbeitung zur Verfügung steht.

In einem Addierer 6 wird das mit negativem Vorzeichen versehene Istmoment $M_{ist}$ vom nicht-kompensierten Sollmoment $M_{soll}$ subtrahiert, wodurch das Hysteresemoment $M_{Hys}$ erzeugt wird, welches die reibungsbedingte Differenz zwischen Istmoment $M_{ist}$ und einer idealen Kennlinie repräsentiert.

In einem nachfolgenden Addierer 7 wird das Hysteresemoment $M_{Hys}$ zum nicht-kompensierten Motorsollwert $M_{Mot,soll}$ hinzuaddiert, wodurch ein kompensiertes Sollmoment $M_{soll,komp}$ erzielt wird, das eine Kompensation der Systemreibung beinhaltet. Dieses kompensierte Sollmoment $M_{soll,komp}$ wird im weiteren Verlauf dem Stellmotor M als Sollmomentvorgabe zugeführt, woraufhin der Stellmotor M ein tatsächliches Motorstellmoment $M_{Servo}$ erzeugt, welches zur Einstellung des gewünschten Lenkwinkels auf die gelenkten Fahrzeugräder übertragen wird.

Bezugszeichenliste

1   Block
2   Block
3   Block
4.  Addierer
5   Hysteresekennlinie
6   Addierer
7   Addierer

M           Stellmotor
$M_{Hand}$      Handlenkmoment
$M_{Hand,Ü}$    übersetztes Handlenkmoment
$M_{Mot,soll}$  nicht-kompensiertes Motorsollmoment
$M_{soll}$      nicht-kompensiertes Sollmoment
$M_{ist}$       Istmoment
$M_{Hys}$       Hysteresemoment
$M_{soll,komp}$ kompensiertes Sollmoment

**Patentansprüche**

1.  Verfahren zum Betrieb eines Lenksystems für ein Kraftfahrzeug, mit wenigstens einem lenkbaren Fahrzeugrad (3), mit einem Übersetzungsgetriebe im Übertragungsweg zwischen einem Lenkrad (2) und dem Fahrzeugrad (3) und mit einem Stellmotor (M), wobei dem Stellmotor (M) zur Erzeugung eines auf das Fahrzeugrad (3) zu übertragenden Motorstellmoments ($M_{Servo}$) eine Sollmomentvorgabe als Funktion des vom Fahrer erzeugten Handlenkmoments ($M_{Hand}$) zugeführt wird, bei dem in der Sollmomentvorgabe für den Stellmotor (M) ein die Reibung im Lenksystem zumindest annähernd kompensierendes Hysteresemoment ($M_{Hys}$) gemäß einer Funktion berücksichtigt wird, *gekennzeichnet durch* die Funktion:

$$M_{soll,komp}' = M_{soll} + M_{Hys}$$

wobei

$M_{soll,komp}$ das kompensierte, dem Stellmotor zuzuführende Sollmoment,
$M_{soll}$ das nicht-kompensierte, aus dem Handlenkmoment (M$_{Hand}$) zu bestimmende Sollmoment und
M$_{Hys}$ das Hysteresemoment

bezeichnet, und wobei
das Hysteresemoment (M$_{Hys}$) aus einer Hysteresekennlinie als
Funktion des nicht-kompensierten Sollmoments (M$_{soll}$) ermittelt wird.

2. Verfahren nach Anspruch 1,
**dadurch gekennzeichnet ,**
**dass** das nicht-kompensierte Sollmoment (M$_{soll}$) als Eingangsgröße in die Hysteresekennlinie eingeht und als Ausgangsgröße ein Istmoment (M$_{ist}$) bestimmt wird, wobei das Hysteresemoment (M$_{Hys}$) durch Subtraktion des Istmoment (M$_{ist}$) vom nicht-kompensierten Sollmoment (M$_{soll}$) gemäß der Beziehung

$$M_{Hys} \; = \; M_{soll} \; - \; M_{ist}$$

bestimmt wird.

3. 4. Verfahren nach einem de Ansprüche 1 bis 2,
**dadurch gekennzeichnet ,**
**dass** das nicht-kompensierte Sollmoment (M$_{soll}$) in Abhängigkeit eines nicht-kompensierten Motorsollmoments (M$_{Mot,soll}$) und eines vom Fahrer erzeugten Handlenkmoments (M$_{Hand, U}$) gemäß der Beziehung

$$M_{soll} \; = \; M_{Mot,soll} \; + \; M_{Hand,0}$$

ermittelt wird.

4. Verfahren nach Anspruch 3,
**dadurch gekennzeichnet ,**
**dass** das Handlenkmoment (M$_{Hand,Ü}$) aus dem vom Fahrer auf das Lenkrad übertragenen und im Übersetzungsgetriebe modifizierten Handlenkmoment (M$_{Hand}$) bestimmt wird.

5. Lenksystem für ein Kraftfahrzeug, insbesondere Lenksystem zur Durchführung des Verfahrens nach einem der Ansprüche 1 bis 4, mit wenigstens einem lenkbaren Fahrzeugrad (3), einem Übersetzungsgetriebe () im Übertragungsweg zwischen einem Lenkrad (2) und dem Fahrzeugrad (3), und einem Stellmotor (M), wobei dem Stellmotor (M) zur Erzeugung eines auf das Fahrzeugrad (3) zu übertragenden Motorstellmoments (M$_{servo}$) eine Sollmomentvorgabe als Funktion des vom Fahrer erzeugten Handlenkmoments zuführbar ist, bei dem

die Sollmomentvorgabe für den Stellmotor (M) um ein die Reibung im Lenksystem zumindest annähernd kompensierendes Hysteresemoment (M$_{Hys}$) gemäß einer Funktion
ermittelbar ist,
**dadurch gekennzeichnet ,**
**dass** in einer Regel- und Steuereinheit eine die Reibung im Lenksystem kennzeichnende Hysteresefunktion abgespeichert ist *und dass* das zumindest annähernd kompensierende Hysteresemoment (M$_{Hys}$) gemäß der Funktion

$$M_{soll,komp} \; = \; M_{soll} \; + \; M_{Hys}$$

ermittelbar ist, wobei

M$_{soll,komp}$ das kompensierte, dem Stellmotor zuzuführende Sollmoment,
M$_{soll}$ das nicht-kompensierte Sollmoment und
M$_{Hys}$ das Hysteresemoment

bezeichnet, und
das Hysteresemoment (M$_{Hys}$) aus einer Hysteresekennlinie als Funktion des nicht-kompensierten Sollmoments (M$_{soll}$) ermittelbar ist.

**Claims**

1. Method for operating a steering system for a motor vehicle, having at least one steerable vehicle wheel (3), a transmission mechanism in the transmission path between a steering wheel (2) and the vehicle wheel (3), and a servomotor (M), a default set point torque being delivered to the servomotor (M) as a function of the manual steering torque (M$_{Hand}$) generated by the driver in order to generate a motor actuating torque (M$_{servo}$) to be transmitted to the vehicle wheel (3), a hysteresis torque (M$_{Hys}$), which compensates at least approximately for the friction in the steering system being taken into account in the default set point torque for the servomotor (M) in accordance with a function, **characterized by** the function:

$$M_{soll,komp} \; = \; M_{soll} \; + \; M_{Hys}$$

where

M$_{soll,komp}$ is the compensated set point torque to be delivered to the servomotor,
M$_{soll}$ is the non-compensated set point torque which is to be determined from the manual steering torque ($M_{Hand}$) and $M_{Hys}$ is the hysteresis torque,

and the hysteresis torque ($M_{Hys}$) is determined from a hysteresis characteristic curve as a function of the non-compensated set point torque ($M_{Soll}$).

**2.** Method according to Claim 1, **characterized in that** the non-compensated set point torque ($M_{soll}$) is incorporated as an input variable into the hysteresis characteristic curve, and an actual torque (Mist) is determined as an output variable, the hysteresis torque ($M_{Hys}$) being determined by subtracting the actual torque (Mist) from the non-compensated set point torque ($M_{soll}$) according to the following equation:

$$M_{Hys} = M_{soll} - M_{ist}$$

**3.** Method according to either of Claims 1 or 2, **characterized in that** the non-compensated set point torque ($M_{soll}$) is determined as a function of a non-compensated motor set point torque ($M_{Mot,soll}$) and of a manual steering torque ($M_{Hand,\ddot{U}}$) generated by the driver according to the equation:

$$M_{soll} = M_{Mot,soll} + M_{Hand,\ddot{U}}$$

**4.** Method according to Claim 3, **characterized in that** the manual steering torque ($M_{Hand,\ddot{U}}$) is determined from the manual steering torque ($M_{Hand}$) which is transmitted to the steering wheel by the driver and modified in the transmission mechanism.

**5.** Steering system for a motor vehicle, in particular a steering system for performing the method according to any one of Claims 1 to 4, having at least one steerable vehicle wheel (3), a transmission mechanism in the transmission path between a steering wheel (2) and the vehicle wheel (3), and a servomotor (M), a default set point torque being deliverable to the servomotor (M) as a function of the manual steering torque generated by the driver in order to generate a motor actuating torque ($M_{Servo}$) to be transmitted to the vehicle wheel (3), where the default set point torque for the servomotor (M) can be determined taking into account a hysteresis torque ($M_{Hys}$) which compensates at least approximately for the friction in the steering system, in accordance with a function, **characterized in that** a hysteresis function characterizing the friction in the steering system is stored in a feedback control unit and **in that** the hysteresis torque ($M_{Hys}$) compensating at least approximately can be determined according to the function:

$$M_{soll,komp} = M_{soll} + M_{Hys}$$

where

$M_{soll,komp}$ is the compensated set point torque to be delivered to the servomotor, $M_{soll}$ is the non-compensated set point torque and $M_{Hys}$ is the hysteresis torque,

and the hysteresis torque ($M_{Hys}$) can be determined from a hysteresis characteristic curve as a function of the non-compensated set point torque ($M_{Soll}$).

## Revendications

**1.** Procédé pour faire fonctionner un système de direction pour un véhicule automobile, comprenant au moins une roue de véhicule orientable (3), comprenant un engrenage démultiplicateur dans la chaîne de transmission entre un volant (2) et la roue de véhicule (3) et comprenant un servomoteur (M), une indication de couple de consigne en fonction du couple de changement de direction manuel ($M_{Manu}$) généré par le conducteur étant acheminée au servomoteur (M) en vue de générer un couple de positionnement de moteur ($M_{Servo}$) à transmettre à la roue de véhicule (3), avec lequel il est tenu compte dans l'indication de couple de consigne pour le servomoteur (M) d'un couple d'hystérésis ($M_{Hys}$) compensant au moins approximativement le frottement dans le système de direction selon une fonction, **caractérisé par** la fonction:

$$M_{Cons,\ comp} = M_{Cons} + M_{Hys}$$

où

$M_{Cons,\ comp}$ désigne le couple de consigne compensé acheminé au servomoteur, $M_{Cons}$ désigne le couple de consigne non compensé à déterminer à partir du couple de changement de direction manuel ($M_{Manu}$) et $M_{Hys}$ désigne le couple d'hystérésis et le couple d'hystérésis ($M_{Hys}$) étant déterminé à partir d'une courbe d'hystérésis en fonction du couple de consigne non compensé ($M_{Cons}$).

**2.** Procédé selon la revendication 1, **caractérisé en ce que** le couple de consigne non compensé ($M_{Cons}$)

intervient dans la courbe d'hystérésis en tant que grandeur d'entrée et la grandeur de sortie déterminée est un couple réel ($M_{Réel}$), le couple d'hystérésis ($M_{Hys}$) étant déterminé en soustrayant le couple réel ($M_{Réel}$) du couple de consigne non compensé ($M_{Cons}$) selon l'équation

$$M_{Hys} = M_{Cons} - M_{Réel}.$$

3. Procédé selon l'une des revendications 1 à 2, **caractérisé en ce que** le couple de consigne non compensé ($M_{Cons}$) est déterminé en fonction d'un couple de consigne du moteur ($M_{Mot, cons}$) non compensé et d'un couple de changement de direction manuel ($M_{Manu, 0}$) généré par le conducteur d'après l'équation

$$M_{Cons} = M_{Mot, cons} + M_{Manu, 0}.$$

4. Procédé selon la revendication 3, **caractérisé en ce que** le couple de changement de direction manuel ($M_{Manu, 0}$) est déterminé à partir du couple de changement de direction manuel ($M_{Manu}$) transmis au volant par le conducteur et modifié dans l'engrenage démultiplicateur.

5. Système de direction pour un véhicule automobile, notamment système de direction destiné à mettre en oeuvre le procédé selon l'une des revendications 1 à 4, comprenant au moins une roue de véhicule orientable (3), un engrenage démultiplicateur dans la chaîne de transmission entre un volant (2) et la roue de véhicule (3) et un servomoteur (M), une indication de couple de consigne en fonction du couple de changement de direction manuel généré par le conducteur étant acheminée au servomoteur (M) en vue de générer un couple de positionnement de moteur ($M_{servo}$) à transmettre à la roue de véhicule (3), avec lequel l'indication de couple de consigne pour le servomoteur (M) peut être déterminée à partir d'un couple d'hystérésis ($M_{Hys}$) compensant au moins approximativement le frottement dans le système de direction selon une fonction, **caractérisé en ce qu'**une fonction d'hystérésis caractérisant le frottement dans le système de direction est mémorisée dans une unité de régulation et de commande et **en ce que** le couple d'hystérésis ($M_{Hys}$) à compensation au moins approximative peut être déterminé selon la fonction :

$$M_{Cons, comp} = M_{Cons} + M_{Hys}$$

où

$M_{Cons, comp}$ désigne le couple de consigne compensé acheminé au servomoteur,
$M_{Cons}$ désigne le couple de consigne non compensé et
$M_{Hys}$ désigne le couple d'hystérésis et le couple d'hystérésis ($M_{Hys}$) peut être déterminé à partir d'une courbe d'hystérésis en fonction du couple de consigne non compensé ($M_{Cons}$).